Europäisches Patentamt

European Patent Office

Office européen des brevets

(19)

(11) **EP 1 402 938 A2**

(12) **EUROPÄISCHE PATENTANMELDUNG**

(43) Veröffentlichungstag:
**31.03.2004 Patentblatt 2004/14**

(51) Int Cl.⁷: **B01D 67/00**, B01D 69/02,
B01D 53/22

(21) Anmeldenummer: **03020859.9**

(22) Anmeldetag: **15.09.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **24.09.2002 DE 10244419**

(71) Anmelder:
• **Max-Planck-Gesellschaft zur Förderung
der Wissenschaften e.V.
80539 München (DE)**
• **GKSS-FORSCHUNGSZENTRUM GEESTHACHT
GMBH
21502 Geesthacht (DE)**

(72) Erfinder:
• **Müller, Hans-Joachim, Dr.
15566 Schöneiche b. Berlin (DE)**
• **Krustev, Rumen, Dr.
70376 Stuttgart (DE)**
• **Kamusewitz, Helmut, Dr.
14513 Teltow (DE)**
• **Möhwald, Helmut, Prof. Dr.
55411 Bingen (DE)**

(74) Vertreter: **Dey, Michael, Dr. et al
Weickmann & Weickmann,
Patentanwälte,
Postfach 86 08 20
81635 München (DE)**

(54) **Gestützte Schaumfilm-Membranen für die Gas-Separation**

(57)     Die vorliegende Erfindung bezieht sich auf Schaumfilm-Membranen in Poren eines porösen Körpers, ein Verfahren zur Herstellung derselben, und auf ihre Verwendung zur Gewinnung oder/und Anreicherung oder/und Abtrennung von Komponenten eines Gasgemisches.

EP 1 402 938 A2

**Beschreibung**

Die vorliegende Erfindung bezieht sich auf Schaumfilm-Membranen in Poren eines porösen Körpers, ein Verfahren zur Herstellung derselben, und auf ihre Verwendung zur Gewinnung oder/und Anreicherung oder/und Abtrennung von Komponenten eines Gasgemisches.

In vielen Gebieten von Technik, Umweltschutz und Medizin besteht die Aufgabe, Gasgemische zu trennen, bestimmte gasförmige Komponenten rein zu gewinnen oder anzureichern oder unerwünschte Beimengungen zu entfernen. Ein Beispiel ist die Gewinnung von angereichertem Sauerstoff oder Stickstoff aus Luft, die großtechnische Bedeutung hat. Ein weiteres Beispiel ist die Entfernung von kleinsten Partikeln aus der Luft.

Zur Gastrennung werden derzeit mit steigendem Produktionsvolumen Polymermembranen mit einer Dicke von einigen hundert Nanometern verwendet. Zunehmend werden auch Feststoffmembranen und Komposit-Membranen untersucht. Chen, S.H. et al. beschreiben im *European Polymer Journal* **32**, 1403-1408 (1996) die Untersuchung von Polysiloxanimid-Membranen zur $O_2/N_2$-Trennung. Aromatische Polyimide wurden zur Entwicklung von Membranen für spezielle Trennaufgaben angepasst (Hensema, E.R., Boom, J.P. *Macromolecular Symposia* **102**, 409-419 (1996)). In zusammengesetzten Membranen wurden beispielsweise sehr dünne Polyimidschichten als dichte Deckschichten eingesetzt (Marek, M. et al. *Polymer* **37** 2577-2579 (1996)). Membranen aus vernetztem Polymethacrylat wurden für die Untersuchung der Permeation von Kohlenwasserstoffen, Perfluorkohlenstoffen und Chlorfluorkohlenstoffen eingesetzt (Hirayama, Y. et al. *Journal of Membrane Science* **163,** 373-381 (1999). Zur Herstellung von Membranen in Form von Hohlfasern wurden beispielsweise Polyetherketone verwendet (Ying, S. et al. *Journal of the Textile Institute* **90,** Special-41 (1999)). Weitere zahlreiche Arbeiten auf dem Gebiet der Polymermembranen beschreiben unter anderem die Untersuchungen von modifizierter Methylcellulose zur Gewinnung von Propylen aus Gasgemischen, Dendrimer-Polyamidoamin-Membranen, welche eine hohe $CO_2$-Permeabilität zeigen, und Polyanilin-Membranen. Eine Übersicht über die Leistungsfähigkeit von Polymermembranen wird von Robeson in *Current Opinion in Solid State & Materials Science* **4**, 549-552 (1999) gegeben.

Eine zunehmende Forschungsaktivität ist auf die Entwicklung und Untersuchung von Membranen zur Gastrennung aus anorganischen Materialien gerichtet. Durch Pyrolyse aus Polymer-Membranen erhaltene Kohlenstoff-Membranen wurden bezüglich ihrer Trenneigenschaften für Gase untersucht (Wang, S.S. et al. *Separation Science & Technology* **31**, 2299-2306 (1996) und Singh-Ghosal, A. & Koros W.J. *Journal of Membrane Science* **174**, 177-188 (2000)). Um eine hohe Selektivität zwischen großen und kleinen Gasmolekülen zu erreichen, haben Levy, R.A. et al. eine dünne $SiO_2$-Schicht auf poröses Vycor-Glas aufgebracht (*Journal of Materials Research* **11**, 3164-3173 (1996). Membranen aus einer Kombination von porösem Aluminiumoxid und einer Porenfüllung aus Polymer und Silica-Partikeln führten zu einer Verbesserung der $O_2/N_2$-Selektivität gegenüber dem reinen Polymer (Moaddeb, M. & Koros, W.J. *Journal of Membrane Science* **125**, 143-163 (1997)). Cot, L. et al. geben in *Solid State Sciences* **2**, 313-334 (2000) eine Übersicht über die Entwicklung auf dem Feld der anorganischen Membranen, die Template, Nanophasen-Materialien, aufwachsende Zeolith-Schichten und organischanorganische Hybridschichten umfasst.

Es ist auch die Verwendbarkeit flüssiger Membranen für die Gastrennung untersucht worden. So wurde die Sauerstoff-Permeabilität einer Anordnung untersucht, bei der Tröpfchen einer Flüssigkeit mit hoher Selektivität für Sauerstoff mit dünnen Schichten eines festen Substrats eingekapselt waren. (Figoli, A. et al., *Journal of Membrane Science* **181**, 97-110 (2001).

Ein wesentlicher Nachteil von Polymermembranen liegt darin, dass sie einige 100 Nanometer dick sein müssen, um die nötige Stabilität aufzubringen und der Gasfluss dadurch häufig gering ist. Die für den Gastransport durch das Material erforderlichen Poren zumindest molekularer Dimension sind i.A. zudem uneinheitlich, was zu einer begrenzten Selektivität solcher Membranen führt. Für eine kommerzielle Anwendung ist jedoch eine hohe selektive Permeabilität erforderlich, um beispielsweise auch Gasgemische ähnlicher Komponenten auftrennen zu können.

Eine Weiterentwicklung auf dem Gebiet der Membranen für die Gastrennung stellt die Untersuchung der Permeation von Gas durch Schaumfilme dar. Von Princen und Mason wurden erste experimentelle Untersuchungen auf diesem Gebiet ausgeführt (Princen, H.M. & Mason, S.G. *Journal of Colloid Science* **20**, 353-375 (1965) und Princen, H.M., Overbeek, J.T.G. & Mason, S.G., J. *Colloid Interface Sci.* **24**, 125-130 (1967). Detaillierte Untersuchungen der Permeation von Luft durch Schaumfilme wurden von Nedyalkov, Krustev und Platikanov ausgeführt. Mit verbesserten Untersuchungsmethoden wurde der Mechanismus der Permeation für unterschiedliche Filmtypen und die Abhängigkeit der Permeabilität von der Temperatur und der Beschaffenheit des verwendeten Tensids untersucht (*Colloids Surfaces A* **79,** 129-136 (1993); *Langmuir* **12**, 1688-1689 (1996); *Colloids Surfaces III* 1-18 (1996); *Dokl.Bolk.Akad.Nauk* **40**, 59-62 (1987); *Colloid Polymer Sci.* **266,** 291-296 (1988); *J. Dispersion Sci. Technol.* **18,** 789-900 (1997); *An. Univ. Sofia Fac. Chem. Jahrbuch* **83,** 81-88 (1991)).

Von Krustev und Müller wurde ein Zusammenhang zwischen der freien Energie des Films, der Adsorptionsdichte des Tensids in den Filmgrenzflächen und der Permeabilität des Films gefunden und eine Methode entwickelt, mit der die Permeabilität bei Variation der freien Energie des Films untersucht werden kann (*Langmuir* **15**, 2134-2141 (1999); *Rev.Sci.Instrum.* **73**, 398-403 (2002). Die Gas-Permeabilität von dünnen Filmen flüssigkristalliner Stoffe ist ebenfalls untersucht worden (Li, J., Schüring, H. & Starnarius, R. *Langmuir* **18**, 112-119 (2002).

N.N. Li et al. beschreibt im US-Patent Nr. 3,650,091 ein Verfahren zur Abtrennung von Komponenten einer Gasmischung, wobei die Gasmischung durch eine Tensidlösung geleitet wird. Dabei bilden sich Gasblasen mit einer Tensidschicht, durch die die zu trennenden Gaskomponenten unterschiedlich schnell permeieren. Es wird ein inertes Trägergas durch den Schaum geleitet, das die schneller durch die Tensidschicht permeierende Komponente mitreißt und so von dem gebildeten Schaum abtrennt. Gemäß diesem Verfahren sollen vor allem Kohlenwasserstoff-Gasgemische aufgetrennt werden. Ein großer Nachteil besteht darin, dass ein Trägergas erforderlich ist, welches wiederum von dem Permeat abgetrennt werden muss. Ein weiterer Nachteil dieses Verfahrens ist es, dass wegen der Größe der Blasen der Kapillardruck in den Blasen, der die Triebkraft für die Permeation von Gas ist, hier auf einen geringen Wert in der Größenordnung von 200 Pa begrenzt ist.

Schaumfilme können bisher auf Grund ihrer geringen thermodynamischen und mechanischen Stabilität nicht effektiv als Trennmembranen zur Auftrennung von zum Beispiel Gasgemischen verwendet werden, obwohl die molekularen Doppelschichten amphiphiler Stoffe (Tenside), wie sie in sehr dünnen Schaumfilmen realisiert sind, sehr dünne Membranen mit einer hohen Gasdurchlässigkeit und mit einer teilweise mit Polymermembranen vergleichbaren Selektivität darstellen. Eine technische Anwendung war daher bislang nicht möglich.

Eine Aufgabe der vorliegenden Erfindung besteht darin, stabile Membranen zur Gastrennung auf der Basis von Schaumfilmen bereitzustellen und ihre Eigenschaften für den Zweck der Gastrennung zu optimieren.

Erfindungsgemäß wird diese Aufgabe durch eine Schaumfilm-Membran-Anordnung gelöst, die dadurch gekennzeichnet ist, dass ein oder mehrere Schaumfilme in Poren eines porösen Körpers vorliegen.

Überraschenderweise wurde gefunden, dass Schaumfilme durch die erfindungsgemäße Schaumfilm-Membran-Anordnung stabilisiert werden, wodurch eine praktische Anwendung bei z.B. der Gastrennung möglich wird. Die Schaumfilme sind im Wesentlichen einheitlich aufgebaut und weisen untereinander ähnliche Dicken und Adsorptionsdichten der Tensidmoleküle auf und halten hohen, einseitig angelegten externen Überdrücken, wie sie bei Gastrennverfahren im Allgemeinen angewandt werden, stand. Die Eigenschaften der erfindungsgemäßen durch einen porösen Körper gestützten Schaumfilme, wie Gasdurchfluss, Permeabilität und Selektivität, sind durch geeignete Wahl der Bestandteile der Membranen bzw. der Herstellungsbedingungen und Durchführungsbedingungen der Trennung einstellbar. Die gemäß der vorliegenden Erfindung bereitgestellten einzelnen Schaumfilme in den Poren eines porösen Körpers bilden zusammen eine große Gesamtfilmfläche, welche für eine technische Nutzung geeignet ist. Somit kann durch die vorliegende Erfindung ein vielseitig einsetzbares Membran-System für verschiedene Aufgaben bereitgestellt werden, das die hohen Erfordernisse an Durchfluss, Permeabilität und Selektivität bei der Trennung von Gasgemischen für z.B. technische und medizinische Zwecke erfüllt.

Der Durchfluss durch eine Membran ist das Gasvolumen, das bei einer bestimmten Temperatur und einem bestimmten Druck durch eine Membran transportiert wird. Der Durchfluss oder Gasfluss ist

$$J = \frac{P}{l}\, \Delta p_{tm},$$

worin l die Dicke der Membran, P der Permeabilitätskoeffizient und $\Delta p_{tm}$ die Druckdifferenz zwischen den beiden Membranseiten ist.

Ein Trenneffekt wird dadurch erreicht, dass die Schaumfilme eine permselektive Barriere darstellen, deren Durchlässigkeit bzw. Permeabilität für die einzelnen Komponenten eines zu trennenden Gasgemisches unterschiedlich ist. Im Idealfall ist die Selektivität der Membran so hoch, dass ausschließlich die gewünschte(n) Komponente(n) die Membran passieren und die übrigen Komponenten zurückgehalten werden.

In der erfindungsgemäßen Schaumfilm-Membran-Anordnung liegen ein oder mehrere Schaumfilme gestützt in Poren eines porösen Körpers vor. Poren sind Durchtritte durch ein Material mit im Allgemeinen röhrenartiger Gestalt. Die Poren können isoliert oder über Porenwege miteinander verbunden sein, wobei letzteres gemäß Erfindung bevorzugt ist. Die in den Poren vorliegenden Schaumfilme werden aus Tensid-Lösungen gebildet und jeder Schaumfilm für sich stellt eine Membran dar. Vorzugsweise besteht die erfindungsgemäße Anordnung aus einer Vielzahl solcher Schaumfilm-Membranen. Besonders bevorzugt ist in jeder Pore jeweils ein Schaumfilm vorhanden. Erfindungsgemäß ist es möglich und bevorzugt, dass jeder Porenweg durch den porösen Körper gerade durch einen Schaumfilm geschlossen wird, so dass die beiden Seiten der Membran-Anordnung vollständig voneinander getrennt sind. Der mittlere Poren-Durchmesser beträgt vorzugsweise $\leq 10^{-4}$ m, mehr bevorzugt $10^{-4}$ bis $10^{-9}$ m, noch mehr bevorzugt $10^{-5}$ bis $10^{-7}$ m, besonders bevorzugt $10^{-4}$ bis $5 \times 10^{-5}$ m. Es kann besonders vorteilhaft sein, wenn der mittlere Poren-Durchmesser mindestens $5 \times 10^{-8}$ m beträgt.

Die Schaumfilme in der erfindungsgemäßen Schaumfilm-Membran-Anordnung sind dünne, nahezu planparallele Schichten einer wässrigen Lösung eines Tensids. Die Oberflächen sind mit Adsorptionsschichten des Tensids bedeckt, wobei die Stabilität des Schaumfilms unter anderem von der Packungsdichte der Tensidmoleküle in den Adsorptionsschichten abhängt. Durch eine höhere Packungsdichte der Tensidmoleküle in den Adsorptionsschichten kann eine höhere Stabilität der Schaumfilm-Strukturen erreicht werden. Zum anderen kann die Permeabilität der resultierenden Schaumfilme für bestimmte Substanzen dirigiert werden, indem die Kettenlänge und die sterischen und elektronischen Eigenschaften der verwendeten Tensidmoleküle und die Tensidkonzentration in der filmbildenden Lösung variiert werden. Die Adsorptionsschichten bilden sich bei Vorhandensein einer ausreichenden Menge eines geeigneten Tensids selbsttätig aus, und die Struktur der einzelnen Schaumfilme in einer solchen Schaumfilm-Membran-Anordnung organisiert sich selbst. Dadurch sind sie einfach herstellbar und reproduzierbar, und alle Einzelfilme in den Poren eines porösen Körpers stimmen in ihren Eigenschaften im Wesentlichen überein. Dadurch kann u.a. eine hohe Selektivität erzielt werden.

Erfindungsgemäß umfassen die Schaumfilme in den Poren des porösen Körpers mindestens ein Tensid und sind vorzugsweise aus einer Lösung gebildet, die eine Tensid-Konzentration von $10^{-7}$ bis 1 M, bevorzugt $10^{-5}$ bis $10^{-2}$ M, besonders bevorzugt $10^{-4}$ bis $10^{-3}$ M, noch mehr bevorzugt $5 \times 10^{-2}$ M aufweist. Die Einstellung der Tensid-Konzentration hängt wesentlich von der Art des Herstellungsverfahrens für die Schaumfilme ab. Bei der Herstellung der Filme mittels Eintrocknen werden beispielsweise relativ geringe Tensid-Konzentrationen eingestellt, da durch den Wasserentzug die Konzentration bis zur Filmbildung kontinuierlich ansteigt. Werden die Schaumfilme z.B. durch Anlegen eines beidseitigen externen Überdrucks hergestellt, wobei die überschüssige Lösung vorzugsweise in ein Reservoir abfließt, ist eine Tensidkonzentration nahe der sogenannten kritischen Mizellbildungs-Konzentration (CMC) vorteilhaft. Die CMC hängt von der chemischen Struktur des Tensids und bei ionischen Tensiden von der Salzkonzentration der Lösung ab und kann je nach diesen Bedingungen recht unterschiedliche Werte annehmen. Das Tensid ist bevorzugt ausgewählt aus der Gruppe bestehend aus Aniontensiden, Kationtensiden, nichtionischen Tensiden, Amphotensiden, Fluortensiden und Mischungen davon. Noch mehr bevorzugt ist das Tensid ausgewählt aus der Gruppe bestehend aus Alkansulfonaten, Alkylbenzolsulfonaten, Fettalkoholsulfaten, Alkylphosphaten, Alkanolamiden, Zuckertensiden, Aminoxiden, Alkylammonium-Verbindungen und Imidazolinium-Verbindungen. Weiterhin kann es in bestimmten Fällen von Vorteil sein, ein oder mehrere Fluortenside oder Mischungen aus Fluortensiden mit anderen Tensiden zu verwenden. Als Fluortenside bezeichnet man Tenside, die als hydrophobe Gruppe einen oder mehrere Perfluoralkylreste tragen. Die Verwendung von Fluortensiden für die erfindungsgemäßen Schaumfilm-Membranen kann auf Grund ihres speziellen chemischen Aufbaus zu größeren Unterschieden in der Permeabilität bestimmter Gase führen, als es bei Filmen aus normalen Tensiden mit Kohlenwasserstoff-Ketten der Fall ist.

Die Dicke des wässrigen Kerns in einem erfindungsgemäßen Schaumfilm wird durch die Grenzflächenkräfte bestimmt. Dies sind im Wesentlichen die abstoßenden Kräfte, die aus der Überlappung elektrischer Doppelschichten der Grenzflächen im Film resultieren. Durch die Ionenkonzentration in der filmbildenden Lösung, also durch Zusatz eines Salzes, kann die Reichweite dieser Kräfte reguliert werden.

In einer bevorzugten Ausführungsform der erfindungsgemäßen Schaumfilm-Membran-Anordnung umfasst die filmbildende Lösung außerdem mindestens ein anorganisches oder/und organisches Salz. Bevorzugt ist das Salz ein Alkali- oder Erdalkalimetallsalz, besonders bevorzugt ist Natriumchlorid. Beispiele für organische Salze sind Alkali- oder Erdalkalisalze von Carbonsäuren, wie Ameisensäure, Essigsäure oder Dicarbonsäuren, wie Oxalsäure, Malonsäure, Bernsteinsäure, Adipinsäure.

Ferner können auch Salze von Benzoesäure, Phthalsäure oder Zitronensäure eingesetzt werden. Es können auch Mischungen verschiedener Salze verwendet werden. Wenn bei Bildung der Schaumfilme unter Verwendung von Fluortensiden Salz zugesetzt wird, ist es bevorzugt, ein organisches Salz zu verwenden.

Die filmbildende Lösung umfasst vorzugsweise 0,005 bis 1,0 Mol eines anorganischen oder/und organischen Salzes pro Liter Lösung, bevorzugt 0,01 bis 0,8, besonders bevorzugt 0,04 bis 0,5, noch mehr bevorzugt von 0,3 bis 0,35 Mol pro Liter Lösung. Insbesondere bei der Verwendung des Tensids Natriumdodecylsulfat kann eine Salzkonzentration von 0,3 bis 0,35 Mol pro Liter vorteilhaft sein.

Somit ist es durch die Art und Konzentration des zugegebenen anorganischen oder/und organischen Salzes letztlich möglich, die gesamte Dicke des Schaumfilms zu verändern. Beispielsweise können sehr dünne Schaumfilme, sogenannte Newton Black Films (NBF), die etwa eine Dicke von < 10 nm aufweisen, aus einer Lösung umfassend 0,5 mol/l NaCl gebildet werden. Bei gleicher Tensid-Konzentration der filmbildenden Lösung entstehen bei Zugabe von 0,01, 0,02 oder 0,03 mol/l NaCl bei gleicher Temperatur Common Black Films (CBF), die eine Dicke im Bereich von 10 bis 50 nm haben.

Allgemein ist die optimale Salzkonzentration der Tränklösung an Hand von Messungen der Filmdicke in Abhängigkeit der Salzkonzentration als diejenige Konzentration zu wählen, bei der bei weiterer Erhöhung die Filmdicke nicht mehr abnimmt (die Dicke eines Newtonschen Films, die minimale Schaumfilmdicke wird erreicht), plus 10 %.

Die Dicke der Schaumfilme in der erfindungsgemäßen Schaumfilm-Membran-Anordnung beträgt 3 nm bis 100 nm. Im oberen Bereich sind Dicken von 20 bis 80 nm bevorzugt, mehr bevorzugt sind Dicken von 30 bis 60 nm, besonders bevorzugt Dicken von 40 bis 50 nm. Dünnere Schaumfilme weisen bevorzugt Dicken von 6 nm bis 13 nm, besonders bevorzugt 8 nm bis 11 nm auf. Selbst die dünnen Schaumfilme sind sehr stabil. Im Gegensatz dazu sind Polymermembranen im Allgemeinen mehrere hundert Nanometer dick, wodurch der Gasfluss durch die Membran geringer wird. Auch im Vergleich zu den für Zwecke der Gasseparation untersuchten anorganischen Membranen und Hybrid-Membranen sind die erfindungsgemäßen Schaumfilme erheblich dünner.

Gemäß der vorliegenden Erfindung können die Eigenschaften der Schaumfilm-Membranen durch verschiedene Faktoren beeinflusst und gezielt eingestellt werden. Wie oben erläutert, können je nach Art und Konzentration von Tensid und anorganischem bzw. organischem Salz in der filmbildenden Lösung die Dicke und Stabilität der Schaumfilme gesteuert werden. Außerdem spielen diese Parameter in Bezug auf die Permeabilität der Schaumfilme eine Rolle.

Desweiteren können die Temperatur und die relative Luftfeuchtigkeit bei der Herstellung oder/und der Anwendung der erfindungsgemäßen Schaumfilm-Membran einen Einfluss auf die Eigenschaften der Schaumfilme haben.

Insbesondere kann der auf die erfindungsgemäßen Membranen ausgeübte Druck deren Eigenschaften modifizieren. Dabei ist zu unterscheiden zwischen dem von beiden Seiten der Membran-Anordnung ausgeübten Überdruck $\Delta p_{ext}$ und dem Überdruck $\Delta p_{tm}$ auf der einen Seite der Membranen im Vergleich zur anderen Seite der Membranen.

$\Delta p_{tm}$ stellt allgemein eine Triebkraft für den Transport von Gas durch Membranen dar. Auch besteht bei Einsatz von Gasgemischen eine solche Triebkraft in einem Unterschied im Mischungsverhältnis der Komponenten, d.h. in einer Partialdruckdifferenz.

Es ist allgemein bekannt, dass der Gasfluss mit zunehmendem $\Delta p_{tm}$ zunimmt. Überraschend hingegen ist, dass der Permeabilitätskoeffizient K der Schaumfilme in der Schaumfilm-Membran-Anordnung gemäß der vorliegenden Erfindung durch Änderung des $\Delta p_{ext}$ modifizierbar ist. Der Permeabilitätskoeffizient ist durch folgende Gleichung definiert:

$$\frac{-dN}{dt} = KF\Delta p_{tm}$$

wobei N (in mol) die Gasmenge ist, die einen bestimmten Film durchquert hat. t ist die Dauer des Permeationsprozesses, F ist die Filmfläche und $\Delta p_{tm}$ ist der Druckunterschied zwischen den Gasräumen auf beiden Seiten des Films.

Ein besonderer Vorteil der vorliegenden Erfindung ist, dass die Permeabilitäts-Eigenschaften, ausgedrückt durch den Permeabilitätskoeffizienten K, der erfindungsgemäßen Schaumfilm-Membranen durch $\Delta p_{ext}$ eingestellt, d.h. geschaltet werden können. So ist es beispielsweise möglich, die Permeabilität eines aus einer Tensidlösung, welche ein anorganisches oder organisches Salz enthält, gebildeten erfindungsgemäßen Schaumfilms durch eine Veränderung des $\Delta p_{ext}$ zu variieren. Der Einfluss von $p_{ext}$ auf die Permeabilität, also der Faktor, um welchen sich die Permeabilität mit $p_{ext}$ verändert, kann abhängig z.B. von der Art und Menge des verwendeten Tensids oder/und Salzes variieren. Erfindungsgemäß ist es möglich, die Permeabilität durch Anlegen eines externen Drucks auf das Doppelte, vorzugsweise das Vierfache, besonders bevorzugt das Achtfache zu erhöhen. Bei Erhöhen von $\Delta p_{ext}$ von 0 Pa auf etwa 8000 Pa erhält man dabei beispielsweise die Erhöhung der Permeabilität um das Achtfache. Auch schon bei Anlegen von geringeren Drücken, wie 1000 Pascal, 3000 Pascal und 4000 Pascal kann eine Erhöhung der Permeabilität um etwa das 1,5fache, Doppelte bzw. Vierfache erreicht werden. Die Änderung der Permeabilität kann erfindungsgemäß bereits in wenigen Sekunden erreicht werden, z.B. nach etwa 5 bis 60 Sekunden, bevorzugt 10 bis 40 Sekunden, am meisten bevorzugt in weniger als 10 Sekunden. Die Schaltbarkeit der erfindungsgemäßen Schaumfilm-Membranen ist individuell auf das zu lösende Trennproblem einstellbar, wobei die Art oder Konzentration des Tensids oder/und des anorganischen bzw. organischen Salzes in der filmbildenden Tensid-Lösung, Temperatur und Luftfeuchtigkeit einen Einfluss ausüben können (siehe oben).

Um die Permeabilität einer erfindungsgemäßen Membran-Anordnung bzw. der einzelnen darin enthaltenen Schaumfilm-Membranen zu verändern, wird vorzugsweise bei Anlegen eines bestimmten externen Drucks $\Delta p_{ext}$ die Anordnung mit einem Reservoir verbunden, in welchem ein geringerer Druck als auf den beiden Seiten der Membran-Anordnung herrscht. Vorzugsweise steht das Reservoir unter Atmosphärendruck. Wenn durch Ausüben eines Drucks von beiden Seiten der Membranen Tensidlösung aus der Anordnung verdrängt wird, kann diese über eine entsprechende Verbindung in das Reservoir abfließen.

Diese Schaltbarkeit der Membranen stellt einen wesentlichen Vorteil gegenüber herkömmlichen Membranen, wie z.B. Polymer-Membranen dar, und zahlreiche, insbesondere technische Anwendungen der Membranen werden dadurch ermöglicht. Z.B. können sie erfindungsgemäß in Mikroreaktoren eingesetzt werden.

Der externe Druck $\Delta p_{ext}$ kann von 0 Pa bis $10^8$ Pa reichen, bevorzugt von 100 Pa bis $10^6$ Pa, mehr bevorzugt von 1000 bis $10^5$ Pa, noch mehr bevorzugt von 2000 bis $10^4$ Pa, besonders bevorzugt von 5000 bis 8000 Pa.

Zusätzlich zu dem von beiden Seiten der Membran angelegten Druck $\Delta p_{ext}$ kann bei der Verwendung einer erfindungsgemäßen Schaumfilm-Membran-Anordnung zur Gastrennung für den Gasfluss ein Überdruck $\Delta p_{tm}$ als Triebkraft eingestellt werden. Diese Druckdifferenz $\Delta p_{tm}$ beträgt im Allgemeinen ca. 10 Pa

bis $10^6$ Pa, mehr bevorzugt $10^3$ Pa bis $10^5$ Pa, noch mehr bevorzugt $10^4$ Pa. Insbesondere beträgt $\Delta p_{tm}$ 5 x $10^3$ bis 5 x $10^5$ Pa. Es kann auch ausschließlich ein einseitiger Druck $\Delta p_{tm}$ ausgeübt werden, ohne zusätzlich einen Druck $\Delta p_{ext}$ von beiden Seiten anzulegen.

Im Gegensatz zu bisher beschriebenen Schaumfilmen sind die in der erfindungsgemäßen Anordnung in Poren eines porösen Körpers vorliegenden Schaumfilme äußerst stabil und halten hohen einseitig angelegten Überdrücken $Ap_{tm}$ stand. Dies ist zum Beispiel bei der Anwendung zur Trennung von Gasen wichtig, da eine Triebkraft für eine für die Gastrennung nötige Gasdiffusion durch den Film ein Unterschied im Gasdruck auf beiden Seiten ist. Die erfindungsgemäßen Schaumfilme können so hergestellt werden, dass sie vorzugsweise einem $\Delta p_{tm}$ von bis zu $10^5$ Pa, mehr bevorzugt bis zu $10^6$ Pa, mehr bevorzugt bis zu 1,5 x $10^6$ Pa, noch mehr bevorzugt bis zu 5 x $10^6$ Pa standhalten. Um Schaumfilme technisch zur Trennung von Gasgemischen nutzen zu können, kann es vorteilhaft sein, dass sie Druckdifferenzen $\Delta p_{tm}$ von bis zu 5 x $10^4$ Pa, mehr bevorzugt bis zu $10^5$ Pa, noch mehr bevorzugt bis zu 2 x $10^5$ ausgesetzt werden können.

Während eines Trennverfahrens kann beispielsweise die Permeabilität der Membranen durch den externen Druck $\Delta p_{ext}$ so eingestellt werden, dass eine bestimmte abzutrennende Komponente leicht durch die Membran permeiert, wohingegen die restlichen Komponenten auf der anderen Seite der Membranen verbleiben. Nach Abtrennen einer bestimmten Komponente kann der externe Druck $\Delta p_{ext}$ anschließend wiederum so eingestellt werden, dass eine weitere abzutrennende Komponente des Gasgemisches durch die Membran permeieren kann, und der Rest des Gemisches auf der anderen Seite der Schaumfilme verbleibt usw.

Weiterhin ist es möglich, bei der Herstellung der Membranen durch Anwenden eines bestimmten von beiden Seiten der Membran angelegten Drucks die Permeabilität der Membranen einzustellen, und die Permeabilität dann während eines Trennverfahrens nicht weiter zu verändern.

In einer weiteren bevorzugten Ausführungsform der Erfindung kann die Dicke der in den Poren gebildeten Schaumfilme durch einen beidseitig auf die Schaumfilm-Membranen angelegten Überdruck eingestellt werden.

Der poröse Körper der erfindungsgemäßen Schaumfilm-Membran-Anordnung kann prinzipiell aus jedem porösen Material mit der geeigneten Porengröße bestehen. Beispiele dafür sind poröse hydrophile, polymere, metallische und keramische Feststoffe. Desweiteren können auch poröses Glas oder zusammengesetzte poröse Materialien eingesetzt werden. In einer bevorzugten Ausführungsform wird ein poröser Körper aus einem porösen Glas verwendet. Der poröse Körper kann jede Gestalt annehmen, wobei er vorzugsweise eine Platte oder eine Röhre ist. Im Allgemeinen können kommerziell erhältliche poröse Materialien eingesetzt werden.

Des weiteren können sogenannte Kernspurmembranen als poröser Körper für die Schaumfilme verwendet werden. Die Kernspurmembranen enthalten nur glatt durchgehende Poren gleichen Querschnitts, die durch Beschuss mit Partikeln aus einer radioaktiven Quelle und nachfolgende Entwicklung erzeugt werden können. Weiter ist es möglich, den porösen Körper in Form von Hohlfasern oder als wickelbare Folie auszuführen.

Bevorzugt ist hierbei, dass die Poren des porösen Körpers einen mittleren Durchmesser von $\geq$ 5 x $10^{-8}$ m haben, und dass die Schaumfilme in derartigen Anordnungen durch Eintrocknen gebildet werden (s.u.).

In einer bevorzugten Ausführungsform besteht die Schaumfilm-Membran-Anordnung der vorliegenden Erfindung aus einer grob-porösen Platte, umgeben von feinporösem Rand. Der mittlere Poren-Durchmesser des grob-porösen Teils wird so gewählt, dass sich in den Poren Schaumfilme ausbilden. In dem fein-porösen Rand ist der mittlere Porendurchmesser so, dass bei der Herstellung der Schaumfilme überschüssige Tensidlösung abfließen kann und in den feinen Poren keine Schaumfilme ausgebildet werden.

In einer weiteren Ausführungsform besteht die Schaumfilm-Membran-Anordnung aus einer grob-porösen Platte mit fein-porösem Überzug, wobei die grobporöse Platte die mechanische Festigkeit der Anordnung liefert und die Schaumfilme in der fein-porösen Schicht, worin die Größe der Poren im erfindungsgemäßen Bereich liegt, gebildet werden.

Ein weiterer Gegenstand der vorliegenden Erfindung ist ein Verfahren zur Herstellung einer Schaumfilm-Membran-Anordnung, umfassend die Schritte:

(a) Bereitstellen eines porösen Körpers,
(b) Kontaktieren des porösen Körpers aus (a) mit einer Tensidlösung und
(c) Aussetzen des porösen Körpers aus (b) einem Überdruck $\Delta p_{ext}$, der ausreicht, die Tensidlösung so zu verdrängen, dass in den Poren Schaumfilme gebildet werden;
oder/und
(d) Äquilibrieren des porösen Körpers aus (b) mit einem Gas einer solchen relativen Feuchtigkeit, dass Wasser aus der Tensidlösung in den Poren verdampft und Schaumfilme gebildet werden.

Erfindungsgemäß wird bei dem Verfahren zur Herstellung einer Schaumfilm-Membran-Anordnung in Schritt (a) ein poröser Körper bereitgestellt, der vorzugsweise Poren mit einem mittleren Durchmesser von $\leq 10^{-4}$ m, mehr bevorzugt $10^{-4}$ bis $10^{-9}$ m aufweist. Es kann bevorzugt sein, dass der mittlere Porendurchmesser $\geq$ 5 x $10^{-8}$ m beträgt. Wie oben beschrieben, kann der poröse Körper aus jedem geeigneten porösen Material bestehen, das die erfindungsgemäß erforderliche mittlere Porengröße aufweist.

Der poröse Körper wird in Schritt (b) mit einer Tensidlösung kontaktiert, wobei das Tensid oder mehrere Tenside je nach den gewünschten Eigenschaften der zu bildenden Schaumfilme ausgewählt werden. Prinzipiell kann jede Art von Tensid verwendet werden, insbesondere wird eine Tensidlösung mit einem oder mehreren der oben genannten Tenside eingesetzt.

Weiterhin werden die Eigenschaften der erfindungsgemäßen, Schaumfilme durch die Tensid-Konzentration in der filmbildenden Lösung beeinflusst. Bevorzugt beträgt die Tensid-Konzentration in der Tensidlösung $10^{-7}$ bis 1,0 M, bevorzugt $10^{-5}$ bis $10^{-2}$ M, besonders bevorzugt $10^{-4}$ bis $10^{-3}$ M. Die Einstellung der Tensid-Konzentration hängt wesentlich von der Art des Herstellungsverfahrens für die Schaumfilme ab. Bei der Herstellung der Filme mittels Eintrocknen werden beispielsweise relativ geringe Tensid-Konzentrationen eingestellt, da durch den Wasserentzug die Konzentration bis zur Filmbildung kontinuierlich ansteigt. Zu hohe Tensid-Konzentrationen würden in diesem Fall zum Ausfällen von festem Tensid in den Poren und damit zur Verstopfung der Poren führen.

Für den Fall der Verdampfungsmethode kann man die zu wählende Ausgangskonzentration der Tränklösung wie folgt abschätzen:

| | |
|---|---|
| $V_p$: | Gesamt-Porenvolumen des porösen Substrats (als flächiges Gebilde angenommen) je Flächeneinheit |
| $A_p$: | Gesamte innere Porenoberfläche je Flächeneinheit des Substrats |
| $A_o$: | Flächenbedarf eines Mols des verwendeten Tensids in einer gesättigten Adsorptionsschicht |
| $Z$: | Zahl der durchgehenden Porenwege je Flächeneinheit des Substrats |
| $Q_p$: | mittlere Querschnittsfläche der Poren |
| $0 \leq B \leq 1$: | Faktor, der die abzuschätzende relative Bedeckung der Poreninnenflächen des Substrats mit Tensidmolekülen beschreibt |
| $E$: | Konstante zur Erhöhung der Tensidkonzentration, die die Filmbildung auch bei Schwankungen der Poreneigenschaften sichern soll, praktisch etwa 50 % |
| $C_T$: | Optimale Konzentration der Tränklösung. |

Es ergibt sich:

$$C_T = \frac{A_p B + 2 Z Q_p}{A_o V_p} (1 + E)$$

Dabei wird vorausgesetzt, dass die nach dem Tränken des Substrats außen anhaftende Tensidlösung entfernt wird (zum Beispiel durch Abtupfen).

Die Tensidlösung gemäß Schritt (b) des erfindungsgemäßen Verfahrens kann außerdem weitere Bestandteile umfassen, wie beispielsweise ein oder mehrere anorganische oder/und organische Salze. Auch durch Art und Konzentration des Salzes können die Eigenschaften, wie die Dicke und Stabilität, der resultierenden Schaumfilme eingestellt werden, wie oben erläutert.

Vorzugsweise wird der poröse Körper in Schritt (b) mit der Tensidlösung kontaktiert, indem er vollständig oder teilweise mit der Lösung getränkt wird.

Zur Ausbildung der Schaumfilme in den Poren wird der mit der Tensidlösung kontaktierte Körper einem Schritt (c) oder/und (d) unterworfen.

Gemäß Schritt (c) des erfindungsgemäßen Verfahrens wird der poröse Körper einem Überdruck $\Delta p_{ext}$ ausgesetzt, der groß genug ist, dass der sich aus der Oberflächenspannung der Tensidlösung und dem Durchmesser der Pore ergebenden maximalen Krümmungsdruck, der dem Eindringen des Gases entgegenwirkt, überwunden wird und sich in der Pore ein Schaumfilm ausbildet. Voraussetzung für die Durchführung dieser Verfahrensvariante (c) ist, dass die Poren des porösen Körpers ein untereinander verbundenes Netzwerk bilden.

Der Druck $\Delta p_{ext}$ wird auf den mit Tensidlösung getränkten porösen Körper ausgeübt, d.h. von beiden Seiten der entstehenden Schaumfilm-Membranen. Vorzugsweise beträgt der Überdruck $10^2$ bis $10^8$ Pascal, mehr bevorzugt $10^3$ bis $10^7$ Pascal, besonders bevorzugt $10^4$ bis $10^5$ Pa. Durch das eindringende Gas wird die in den Poren vorhandene Tensidlösung aus den Poren verdrängt, wobei, wenn sich die von beiden Seiten vorrückenden Oberflächen in der Pore treffen, wegen der stabilisierenden Grenzflächenkräfte, die durch die Tensid-Adsorptionsschichten hervorgerufen werden, ein dünner Schaumfilm bestehen bleibt. Vorzugsweise wird die aus den Poren verdrängte Tensidlösung in ein Reservoir abgeführt, in welchen der Druck geringer ist als $\Delta p_{ext}$, vorzugsweise steht das Reservoir unter Atmosphärendruck.

Entsprechend den obigen Ausführungen ist durch Anlegen verschiedener Drücke $\Delta p_{ext}$ die Permeabilität der Schaumfilme schaltbar, d.h. es kann bereits bei der Herstellung eine gewünschte Permeabilität bereitgestellt werden.

Für die Bildung eines dicken Films werden vorzugsweise kleinere Werte für $\Delta p_{ext}$ eingestellt, für die Bildung eines dünnen CBF-Films ein höherer. Noch dünnere Filme (NBF) können durch einen noch höheren $\Delta p_{ext}$ oder bei hohem Salzgehalt (z.B. 0,5 NaCl bei Verwendung von Natriumdodecylsulfat als Tensid) bei kleinem $\Delta p_{ext}$ gebildet werden, wobei eine starke Abhängigkeit vom Tensid besteht. Modifizierung der Permeabilität bzw. Schalten der Permeabilität (s.o.) von NBF benötigt wieder höhere Werte von $\Delta p_{ext}$.

Zusätzlich oder alternativ können Schaumfilme in den Poren erzeugt werden, indem der mit der Tensidlösung kontaktierte poröse Körper mit einem Gas einer bestimmten relativen Feuchtigkeit äquilibriert wird.

Bei hinreichend niedriger relativer Feuchtigkeit verdampft Wasser aus den Poren, bis bei Filmbildung durch die Wirkung der Grenzflächenkräfte das chemische Potential des Wassers in den in den Poren gebildeten Schaumfilmen dem des Wassers in der Dampfphase gleich wird. Vorzugsweise wird der poröse Körper gemäß (d) mit Luft einer geeigneten relativen Feuchtigkeit äquilibriert. Die relative Feuchtigkeit des Gases in Schritt (d) beträgt vorzugsweise 20 % bis 80 %, mehr bevorzugt 30 % bis 50 % und besonders bevorzugt etwa 40 %.

Das Eintrocknen gemäß Schritt (d) kann z.B. bei Raumtemperatur oder auch bei erhöhter Temperatur erfolgen.

Durch das Verfahren gemäß Schritt (d) werden i.A. sehr dünne NBF erreicht, wobei die Zugabe eines anorganischen oder organischen Salzes nicht unbedingt erforderlich, meist sogar unerwünscht ist, da die Gefahr besteht, dass das Salz in den Poren auskristallisiert und diese dadurch verstopft.

Die Dicke der in den Poren gebildeten Schaumfilme beträgt je nach Verfahrensbedingungen (z.B. Tensid-Art und Konzentration, Menge und Art des Salzes) 3 bis 100 nm (s.o.).

In einer bevorzugten Ausführungsform der Erfindung ist die Dicke der in den Poren gebildeten Schaumfilme durch den gemäß Schritt (c) angelegten Überdruck einstellbar.

Bei vergleichsweise großen Poren des porösen Körpers kann es bevorzugt sein, die Schaumfilme durch Anlegen eines Überdrucks und nicht durch Eintrocknen bei Behandlung mit Luft geringer relativer Feuchtigkeit auszubilden.

In einer speziellen Ausführungsform des erfindungsgemäßen Verfahrens werden, wenn der mittlere Poren-Durchmesser des porösen Körpers $10^{-4}$ bis $10^{-7}$ m, mehr bevorzugt $10^{-4}$ bis $5 \times 10^{-5}$ m beträgt, die Schritte (a), (b) und (c) durchgeführt.

Beispielsweise wird eine grob-poröse Platte, die von fein-porösem Rand umgeben ist, mit Tensidlösung getränkt. Durch Anlegen eines Überdrucks von $10^4$ bis $10^5$ Pascal werden im grob-porösen Teil, in welchem der mittlere Poren-Durchmesser $10^{-4}$ bis $5 \times 10^{-5}$ m beträgt, Schaumfilme gebildet. Die aus den Poren verdrängte überschüssige Tensidlösung fließt durch den fein-porösen Ring und eine Kapillare in ein Reservoir ab, in welchem ein geringerer Druck herrscht, als der auf den porösen Körper ausgeübte Druck $\Delta p_{ext}$. Vorzugsweise ist das Reservoir unter Atmosphärendruck. Das Gas kann trotz Überdruck nicht in die feinen Poren des Randes eindringen, da der diesem Druck widerstehende Krümmungsdruck am Eingang der feinen Poren zu groß ist.

Dahingegen kann es von praktischem Vorteil sein, bei sehr kleinen Poren die Ausbildung der Schaumfilme durch Eintrocknen zu erreichen.

In einer weiteren Ausführungsform des erfindungsgemäßen Verfahrens werden daher die Schritte (a), (b) und (d) durchgeführt, wenn der mittlere Poren-Durchmesser des porösen Körpers im Bereich von $10^{-6}$ m bis $10^{-9}$ m, vorzugsweise $10^{-7}$ bis $5 \times 10^{-8}$ liegt.

Für diese Ausführungsform wird zum Beispiel eine grob-poröse Platte mit fein-porösem Überzug bereitgestellt, wobei der mittlere Poren-Durchmesser des fein-porösen Überzugs im Bereich von $10^{-6}$ m bis $10^{-9}$ m liegt. Dieser Körper wird zunächst mit einer Tensidlösung getränkt und anschließend mit Luft geeigneter relativer Feuchtigkeit ins Gleichgewicht gesetzt. Bei dieser Ausführungsform liefert die grob-poröse Platte die mechanische Festigkeit der Membran, ohne dass dort Schaumfilme ausgebildet werden, und in der fein-porösen Schicht werden erfindungsgemäß Schaumfilme durch Eintrocknen der Tensidlösung in den Poren erzeugt.

Bei einem weiteren Beispiel für diese Ausführungsform der Erfindung wird als poröser Körper eine Kernspurmembran mit einem Poren-Durchmesser von $\geq 5 \times 10^{-8}$ m verwendet.

Ein weiterer Gegenstand der vorliegenden Erfindung ist die Verwendung einer Schaumfilm-Membran-Anordnung gemäß der vorliegenden Erfindung zur Gewinnung oder/und Anreicherung oder/und Abtrennung einer oder mehrerer Komponenten eines Gasgemisches.

Mit der erfindungsgemäßen Schaumfilm-Membran-Anordnung können sowohl Gemische gasförmiger Komponenten als auch Gemische, die auch flüssige oder/und feste Bestandteile enthalten, aufgetrennt werden, wobei das Gasgemisch aus zwei oder mehr Komponenten bestehen kann. Die Gewinnung einer Komponente bedeutet, dass diese möglichst rein von den übrigen Komponenten abgetrennt wird, vorzugsweise mit einer Reinheit von $\geq 60$ %, besonders bevorzugt $\geq 75$ %, noch mehr bevorzugt $\geq 85$ %, am meisten bevorzugt 95 - 100 %. Erfindungsgemäß können auch zwei oder mehr Komponenten zusammen von einer komplexeren Mischung abgetrennt werden. Durch eine Anreicherung von Komponenten eines Gasgemisches wird der prozentuale Anteil der anzureichernden Komponente bzw. der mehreren Komponenten im Permeat im Vergleich zum Ausgangs-Gasgemisch erhöht.

Erfindungsgemäß können gasförmige, flüssige oder feste Komponenten gewonnen oder/und angereichert oder/und abgetrennt werden, die vorzugsweise ausgewählt sind aus der Gruppe bestehend aus Sauerstoff, Stickstoff, Argon, $C_1$- bis $C_3$-Kohlenwasserstoffen, Kohlendioxid, Wasser, Feststoffpartikeln wie Staub und Mischungen aus zwei oder mehreren davon. Beispiele für technisch relevante Trennaufgaben, die gemäß der vorliegenden Erfindung realisiert werden können, sind: Abtrennung organischer Lösungsmitteldämpfe wie Methanol, Ethanol, Aceton, Kohlenwasserstoffe und chlorierte Kohlenwasserstoffe von Gasgemischen wie Luft; Rückgewinnung von Wasserstoff bei der Ammoniaksynthese; Einstellung eines bestimmten Wasserstoff/Kohlenmonoxid-Verhältnisses in Synthesegas; Argon- bzw. Helium-Gewinnung; Abgas-Kontrolle bei technischen Anlagen, z.B. Abtrennung von Kohlenwasserstoffen oder saurer Bestandteile aus der Luft.

Insbesondere ist die erfindungsgemäße Schaumfilm-Membran-Anordnung zur Gewinnung oder/und Anreicherung einer oder beider Komponenten des Gasgemisches Sauerstoff/Stickstoff, insbesondere bei der Auftrennung von Luft, geeignet.

In einer besonderen Ausführungsform der vorliegenden Erfindung werden feste Partikel durch die erfindungsgemäße Schaumfilm-Membran-Anordnung abgetrennt, wobei die gasförmigen Komponenten die Membran passieren, und die festen Partikel zurückbleiben. Dies kann z.B. zur Entfernung von Feststoffpartikeln wie Staub o.ä. aus der Luft von Nutzen sein.

Eine Abtrennung von festen Partikeln kann dadurch erreicht werden, dass die abzutrennenden Partikel von den Schaumfilmen adsorbiert werden. Dabei kann es erforderlich sein, die Membran-Anordnung nach einer solchen Anwendung zu erneuern, indem die Schaumfilme entfernt und mit dem erfindungsgemäßen Verfahren wieder erzeugt werden.

Ein weiterer Gegenstand der vorliegenden Erfindung ist ein Verfahren zur Gewinnung oder/und Anreicherung oder/und Abtrennung einer oder mehrerer Komponenten eines Gasgemisches, umfassend die Schritte:

(a$_1$) Bereitstellen mindestens einer Schaumfilm-Membran-Anordnung gemäß der vorliegenden Erfindung in einem Behälter, so dass eine erste Kammer A durch die Schaumfilm-Membran-Anordnungen von einer zweiten Kammer B getrennt ist;
(b$_1$) Einführen des zu trennenden Gasgemisches in Kammer A, wobei in Kammer A ein größerer Druck als in Kammer B eingestellt wird,
und gegebenenfalls
(c$_1$) Abführen des Permeats aus Kammer B.

In Schritt (a$_1$) kann eine einzelne erfindungsgemäße Schaumfilm-Membran-Anordnung bereitgestellt werden, oder es können, beispielsweise um komplexe Gasgemische oder Gasgemische, welche aus schwierig voneinander zu trennenden Komponenten bestehen, zu trennen, zwei oder mehr Schaumfilm-Membran-Anordnungen zusammen verwendet werden. Dabei werden die einzelnen Anordnungen so zusammengefügt, dass das zu trennende Gasgemisch nacheinander durch alle Schaumfilm-Membran-Anordnungen diffundieren kann.

Die Membran-Anordnungen werden so in einem Behälter platziert, dass eine erste Kammer A durch die Schaumfilm-Membran-Anordnung von einer zweiten Kammer B getrennt ist. Das zu trennende Gasgemisch wird in die Kammer A eingeführt, wobei in Kammer A ein größerer Druck als in Kammer B eingestellt wird. Die Druckdifferenz ($\Delta p_{tm}$) zwischen Kammer A und Kammer B beträgt vorzugsweise 10 Pa bis $10^7$ Pa, mehr

bevorzugt 100 Pa bis $10^5$ Pa, noch mehr bevorzugt 200 Pa bis $10^4$ Pa. Insbesondere beträgt $\Delta p_{tm}$ 500 Pa bis 5 x $10^5$ Pa.

In einer besonders bevorzugten Ausführungsform des erfindungsgemäßen Verfahrens wird in beiden Kammern A und B ein variabler externer Druck $\Delta p_{ext}$ im Vergleich zu dem Umgebungsdruck eingestellt, so dass sich die Permeabilität der Schaumfilme in den Schaumfilm-Membran-Anordnung/en während der Trennung verändert. So wird vorzugsweise durch Erhöhen des $\Delta p_{ext}$ die Permeabilität der Membranen vergrößert. Der erfindungsgemäß praktikable $\Delta p_{ext}$ liegt insbesondere in dem oben definierten Bereich.

Gegebenenfalls wird das Permeat in Schritt (c$_1$) aus Kammer B abgeführt und kann beispielsweise direkt dem für das Permeat vorgesehenen Verwendungszweck zugeführt werden. So kann z.B. rückgewonnener Wasserstoff bei der Ammoniaksynthese direkt wieder in den Reaktionsbehälter eingeleitet werden.

In einer weiteren Ausführungsform des erfindungsgemäßen Verfahrens kann das zu trennende Gasgemisch mehrmals in die Kammer A eingeführt und das Permeat entsprechend aus Kammer B abgeführt werden. Das Gasgemisch kann dabei entweder mehrmals nacheinander oder kontinuierlich in Kammer A eingeführt werden.

Sollen mehrere Komponenten nacheinander von dem in Kammer A eingeführten Gasgemisch gewonnen oder angereichert werden, so kann, um eine Vermischung der einzelnen abgetrennten Komponenten bzw. Komponenten-Mischungen zu verhindern, das Permeat jeweils nach Beendigung der Gewinnung bzw. Anreicherung einer Komponente oder eines Komponenten-Gemisches gemäß Schritt (c$_1$) abgeführt werden. Ist eine weitere Auftrennung des Permeats erwünscht, so kann es aus Kammer B der Kammer A rückgeführt werden. Wenn erwünscht, kann dies mehrere Male wiederholt werden, so lange, bis die abzutrennende Komponente im Permeat ausreichend angereichert sind.

Durch die folgenden Abbildungen und Beispiele wird die Erfindung näher erläutert.

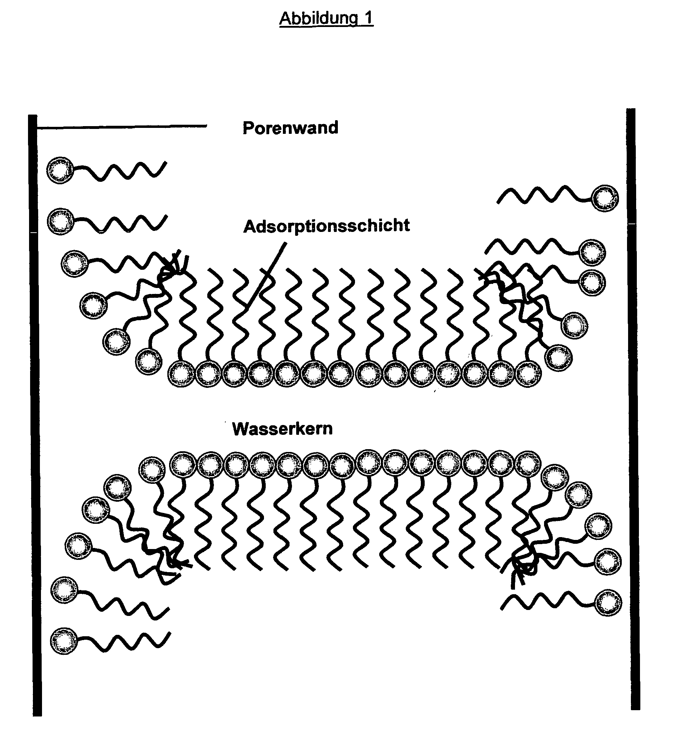

Abbildung 1 veranschaulicht schematisch die Struktur eines erfindungsgemäßen Schaumfilms innerhalb einer Pore. Die Oberflächen des Wasserkerns sind mit Adsorptionsschichten aus Tensid-Molekülen bedeckt, wobei die hydrophilen Enden der Tensidmoleküle in Richtung des Wasserkerns ausgerichtet sind, und die hydrophoben Enden der Tensid-Moleküle aus dem Wasser herausragen. Die Adsorptionsschichten richten sich selbsttätig an beiden Oberflächen des Wasserkerns aus, wodurch zwei selbst-organisierte Doppelschichten gebildet werden.

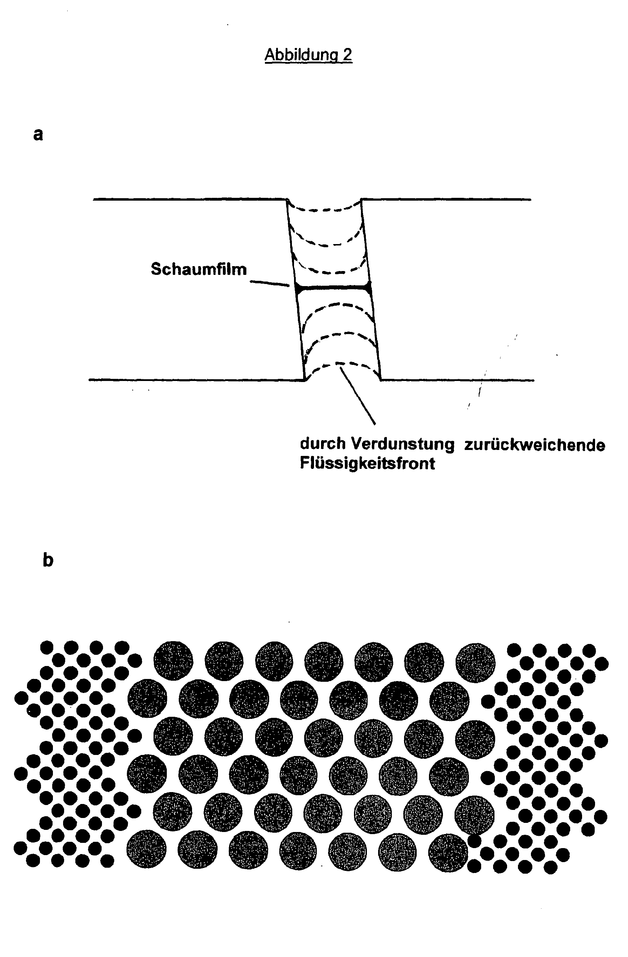

Abbildung 2a veranschaulicht das Prinzip der Bildung von Schaumfilmen in Poren eines porösen Körpers durch Entzug von Wasser mittels Kontakt mit einem Gas herabgesetzter relativer Feuchtigkeit. Durch Verdunstung weichen die Flüssigkeitsoberflächen in den Poren zurück, wodurch die erfindungsgemäßen Schaumfilme gebildet werden können.

Der dargestellte Fall entspricht in der Struktur etwa einer Kernspurmembran, bei der Poren einheitlichen Durchmessers die Membran geradlinig durchqueren.

Abbildung 2b veranschaulicht den Fall eines grobporösen Körpers, der von einem feinporösen Material umgeben ist. An den feinporösen Teil ist eine Kapillare angeschmolzen, die aus dem geschlossenen Raum der Permeationszelle in ein Reservoir unter Normaldruck führt. Zur Bildung von Schaumfilmen im grobporösen Teil werden alle Poren mit der filmbildenden Lösung getränkt. Anschließend wird der Druck in der Permeationszelle um $\Delta p_{ext}$ erhöht. Das Gas dringt von beiden Seiten in die Poren des grobporösen Körpers ein. Wenn sich die Flüssigkeitsfronten von beiden Seiten begegnen, werden Schaumfilme in den Poren gebildet. Die verdrängte Flüssigkeit fließt über die feinen Poren ins Reservoir ab. In die feinen Poren kann das Gas nicht eindringen, da der Krümmungsdruck am Mund der Poren größer ist als $\Delta p_{ext}$.

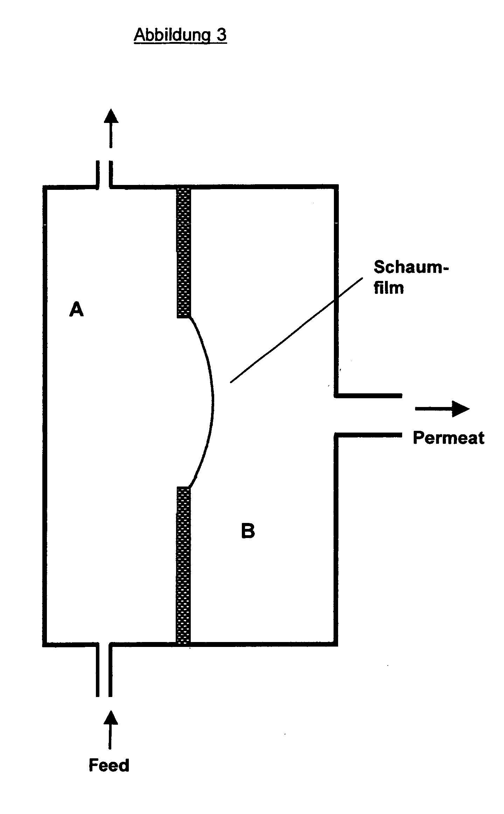

In Abbildung 3 ist schematisch die Verwendung einer erfindungsgemäßen Schaumfilm-Membran zur Gastrennung gezeigt. In Kammer A wird der Zufuhrstrom des zu trennenden Gasgemisches eingeführt (feed), wobei in Kammer A ein größerer Druck vorliegt als in Kammer B. Der leichter permeierende Teil der Gasmischung diffundiert durch den in der Pore P gebildeten Schaumfilm F und sammelt sich in der Kammer B. Dieses Permeat kann aus der Kammer B über eine Leitung abgeführt werden.

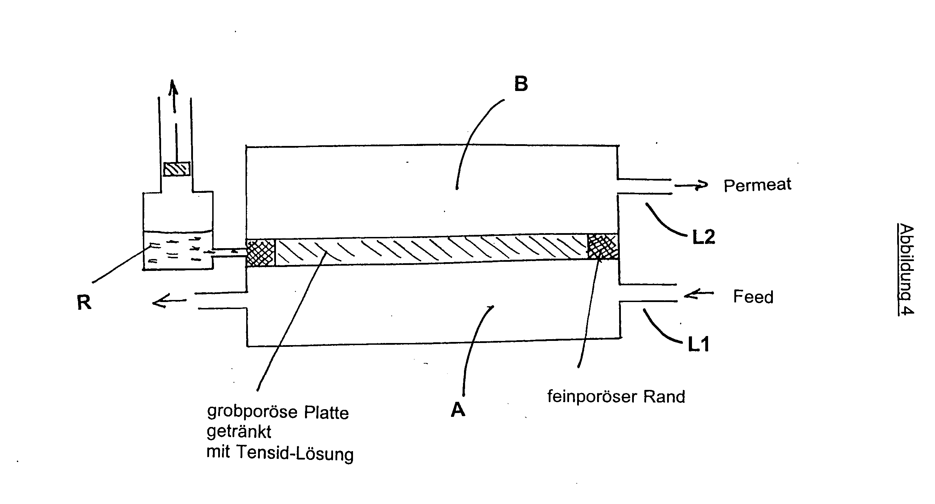

In Abbildung 4 ist eine bevorzugte Ausführungsform der vorliegenden Erfindung schematisch dargestellt, bei der die Permeabilität der Schaumfilme geschaltet werden kann. Der poröse Körper ist eine grobporöse Platte mit einem fein-porösen Rand, wobei die grob-poröse Platte mit Tensid-Lösung getränkt ist. Das Zufuhr-Gasgemisch (feed) wird durch Leitung L1 in die Kammer A eingeführt. Dabei wird in Kammer A ein bestimmter, je nach abzutrennender Komponente variierender Überdruck angelegt, wodurch die jeweilige Komponente oder das jeweilige Komponenten-Gemisch durch die in den Poren der grob-porösen Platte gebildeten Schaumfilme in Kammer B diffundiert. Über Leitung L2 kann das Permeat abgeführt werden. Bei Anlegen eines Überdrucks in Kammer A im Vergleich zu Kammer B wird Tensid-Lösung aus den Poren der grob-porösen Platte nach außen verdrängt und kann durch den fein-porösen Rand in das Reservoir R mit Tensid-Lösung abfließen. In dem fein-porösen Rand bilden sich keine Schaumfilme, da das Gas trotz Überdruck in beiden Kammern nicht in die feinen Poren des Randes eindringen kann, da der diesem Druck widerstehende Krümmungsdruck am Eingang der feinen Poren zu groß ist.

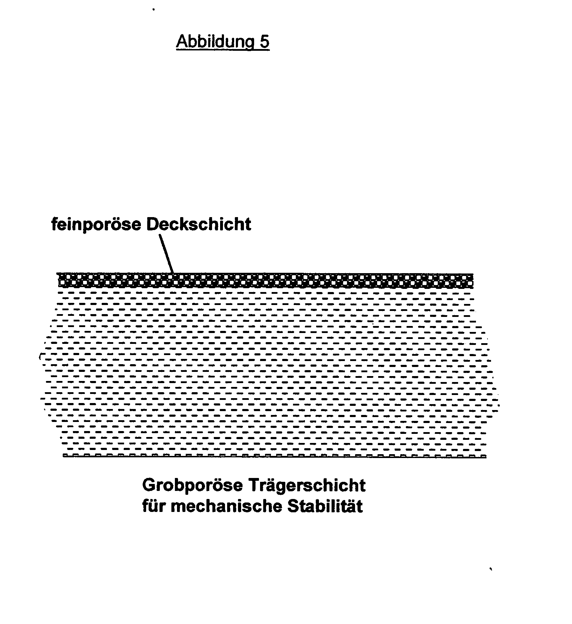

Abbildung 5 zeigt schematisch eine bevorzugte Ausführungsform der vorliegenden Erfindung, bei der der poröse Körper ein grob-poröser Träger mit fein-poröser Deckschicht ist. Die grob-poröse Trägerschicht stellt die mechanische Stabilität der Anordnung bereit, in der feinporösen Deckschicht werden die erfindungsgemäßen Schaumfilm-Membranen gebildet. Gemäß dieser Ausführungsform können die Schaumfilme durch Eintrocknen hergestellt werden.

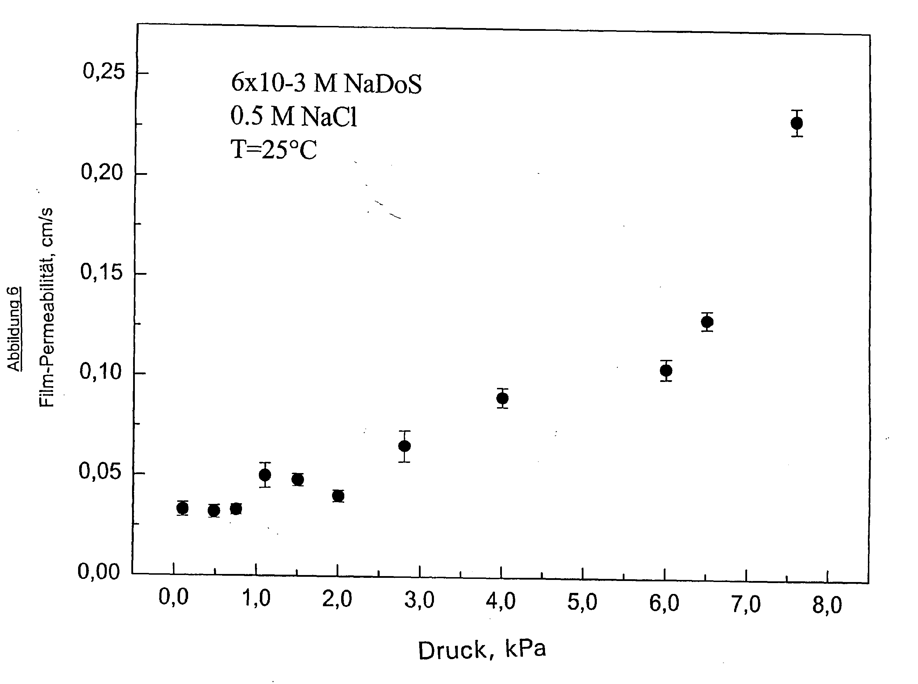

In Abbildung 6 sind Ergebnisse der Messung der Permeabilität eines erfindungsgemäßen Schaumfilms für Luft bei Anwendung verschiedener externer Drücke $\Delta p_{ext}$ dargestellt. Das Diagramm zeigt, dass ein erfindungsgemäßer Schaumfilm, der aus einer $6 \times 10^{-3}$ M Natriumdodecylsulfat-Lösung, die 0,5 Mol pro Liter Natriumchlorid enthält, gebildet ist, bei einer Temperatur von 25°C mit steigendem Druck $\Delta p_{ext}$ eine erhöhte Permeabilität für Luft aufweist. Dem Diagramm kann entnommen werden, dass die Permeabilität eines solchen sehr dünnen Schaumfilms (Newton'scher Schaumfilm) durch Anlegen eines externen Drucks von 8 kPa auf das Achtfache erhöht werden kann.

Beispiel 1: Herstellung einer erfindungsgemäßen Schaumfilm-Membran-Anordnung durch Anlegen eines Überdruckes

Eine grob-poröse Glasplatte mit einem mittleren Poren-Durchmesser von etwa $10^{-4}$ m, die einen feinporösen Rand aufweist, wird mit einer $6 \times 10^{-3}$ M Natriumdodecylsulfat-Lösung, die 0,5 Mol Natriumchlorid pro Liter Lösung enthält, getränkt und einem Überdruck im Bereich von $10^4$ bis $10^5$ Pascal ausgesetzt. Dabei ist die Flüssigkeit in den Poren durch eine mit dem porösen Körper verbundene Kapillare mit einem Reservoir der Tensid-Lösung verbunden, das unter Normaldruck steht. Auf Grund des Überdrucks wird in einer durchgehenden Porenverbindung die Flüssigkeit durch das von den Porenöffnungen auf beiden Seiten des Trägers eindringende Gas verdrängt, wobei die Flüssigkeit über die Verbindungskapillare ins Reservoir abfließt (siehe auch Figur 4). Wenn sich die von beiden Seiten vorrückenden Oberflächen in der Pore treffen, verbleibt wegen der stabilisierenden Grenzflächenkräfte, die durch die Tensid-Adsorptionsschichten hervorgerufen werden, ein dünner Schaumfilm bestehen. Der externe Druck muss groß genug sein, um den sich aus der Oberflächenspannung der Tensid-Lösung und dem Durchmesser der Pore ergebenden maximalen Krümmungsdruck, der dem Eindringen des Gases entgegenwirkt, zu überwinden und einen Schaumfilm in der Pore auszubilden.

Beispiel 2: Herstellung einer erfindungsgemäßen Schaumfilm-Membran-Anordnung durch Eintrocknen

Eine grob-poröse Platte mit einem fein-porösen Überzug, worin der mittlere Poren-Durchmesser etwa $5 \times 10^{-8}$ m beträgt, wird mit einer $6 \times 10^{-3}$ M Natriumdodecylsulfat-Lösung mit 0,5 M Natriumchlorid getränkt und mit Luft mit einer relativen Feuchtigkeit von etwa 40 % äquilibriert. Das Wasser verdampft aus den Poren, bis unter Filmbildung durch die Wirkung der Grenzflächenkräfte das chemische Potential des Wassers in den in den Poren gebildeten Schaumfilmen dem des Wassers in der Dampfphase gleich wirkt. Dadurch entstehen die erfindungsgemäßen Schaumfilme in den Poren der fein-porösen Deckschicht. Die grob-poröse Platte dient zur mechanischen Festigkeit der Membran-Anordnung.

**Patentansprüche**

1.  Schaumfilm-Membran-Anordnung, **dadurch gekennzeichnet, dass** ein oder mehrere Schaumfilme in Poren eines porösen Körpers vorliegen.

2.  Schaumfilm-Membran-Anordnung nach Anspruch 1, **dadurch gekennzeichnet, dass** der mittlere Durchmesser der Poren $10^{-4}$ bis $10^{-9}$ m beträgt.

3.  Schaumfilm-Membran-Anordnung nach Anspruch 1 oder 2, **dadurch gekennzeichnet, dass** die Schaumfilme mindestens ein Tensid umfassen.

4.  Schaumfilm-Membran-Anordnung nach einem der Ansprüche 1 bis 3, **dadurch gekennzeichnet, dass** die Schaumfilme aus einer Lösung gebildet sind, welche eine Tensid-Konzentration von $10^{-7}$ M bis 1,0 M aufweist.

5.  Schaumfilm-Membran-Anordnung nach Anspruch 3 oder 4, **dadurch gekennzeichnet, dass** das Tensid ausgewählt ist aus der Gruppe bestehend aus Fluortensiden, Aniontensiden, Kationtensiden, nicht-ionischen Tensiden und Amphotensiden.

6.  Schaumfilm-Membran-Anordnung nach einem der Ansprüche 1 bis 5, **dadurch gekennzeichnet, dass** die Schaumfilme aus einer Lösung gebildet sind, die mindestens ein anorganisches oder/und organisches Salz umfasst.

7.  Schaumfilm-Membran-Anordnung nach einem der Ansprüche 1 bis 6, **dadurch gekennzeichnet, dass** die Dicke der Schaumfilme 3 nm bis 100 nm beträgt.

8.  Schaumfilm-Membran-Anordnung nach einem der Ansprüche 1 bis 7, **dadurch gekennzeichnet, dass** die Permeabilität der Schaumfilme durch Änderung eines externen Drucks $\Delta p_{ext}$ modifiziert werden kann.

9.  Schaumfilm-Membran-Anordnung nach Anspruch 8, **dadurch gekennzeichnet, dass** die Permeabilität der Schaumfilme durch Erhöhen von $\Delta p_{ext}$ zunimmt.

10. Schaumfilm-Membran-Anordnung nach einem der Ansprüche 1 bis 9, **dadurch gekennzeichnet, dass** die Schaumfilme bei einseitig angelegten Drücken bis zu $1,5 \times 10^6$ Pa stabil sind.

11. Verfahren zur Herstellung einer Schaumfilm-Membran-Anordnung, umfassend die Schritte:

    (a) Bereitstellen eines porösen Körpers,
    (b) Kontaktieren des porösen Körpers aus (a) mit einer Tensidlösung und
    (c) Aussetzen des porösen Körpers aus (b) einem Überdruck $\Delta p_{ext}$, der ausreicht, die Tensidlösung so zu verdrängen, dass in den Poren Schaumfilme gebildet werden;
    oder/und
    (d) Äquilibrieren des porösen Körpers aus (b) mit einem Gas einer solchen relativen Feuchtigkeit, dass Wasser aus der Tensidlösung in den Poren verdampft wird und Schaumfilme gebildet werden.

12. Verfahren nach Anspruch 11, **dadurch gekennzeichnet, dass** der mittlere Poren-Durchmesser des porösen Körpers aus (a) $10^{-4}$ bis $10^{-9}$ m beträgt.

13. Verfahren nach Anspruch 11 oder 12, **dadurch gekennzeichnet, dass** der poröse Körper in Schritt (c) einem Überdruck $\Delta p_{ext}$ von $10^2$ bis $10^6$ Pa ausgesetzt wird.

14. Verfahren nach einem der Ansprüche 11 bis 13, **dadurch gekennzeichnet, dass** die Tensidlösung in Schritt (b) mindestens ein Tensid umfasst, ausgewählt aus der Gruppe bestehend aus Fluortensiden, Aniontensiden, Kationtensiden, nicht-ionischen Tensiden und Amphotensiden.

15. Verfahren nach einem der Ansprüche 11 bis 14, **dadurch gekennzeichnet, dass** die Tensid-Konzentration in der Tensidlösung aus Schritt (b) $10^{-7}$ bis 1,0 M beträgt.

16. Verfahren nach einem der Ansprüche 11 bis 15, **dadurch gekennzeichnet, dass** die Tensidlösung außerdem 0,005 bis 1,0 Mol eines anorganischen oder/und organischen Salzes pro Liter Lösung umfasst.

17. Verfahren nach einem der Ansprüche 11 bis 16, **dadurch gekennzeichnet, dass** das Gas gemäß Schritt (d) eine relative Feuchtigkeit von 20 % bis 80 % aufweist.

18. Verfahren nach einem der Ansprüche 11 bis 15, **dadurch gekennzeichnet, dass** die Dicke der in den Poren gebildeten Schaumfilme 3 bis 100 nm beträgt.

**19.** Verfahren nach einem der Ansprüche 11 bis 18, **dadurch gekennzeichnet, dass** die Dicke der in den Poren gebildeten Schaumfilme durch den gemäß Schritt (c) angelegten Überdruck einstellbar ist.

**20.** Verwendung einer Schaumfilm-Membran-Anordnung gemäß einem der Ansprüche 1 bis 10 zur Gewinnung oder/und Anreicherung oder/und Abtrennung einer oder mehrerer Komponenten eines Gasgemisches.

**21.** Verwendung nach Anspruch 20, **dadurch gekennzeichnet, dass** die Komponenten des Gasgemisches ausgewählt sind aus Sauerstoff, Stickstoff, Argon, $C_1$-$C_3$-Kohlenwasserstoffen, Kohlendioxid, Wasser, Feststoffpartikeln und Mischungen aus zwei oder mehreren davon.

**22.** Verwendung nach Anspruch 20, **dadurch gekennzeichnet, dass** das Gasgemisch Feststoffpartikel umfasst, welche abgetrennt werden.

**23.** Verfahren zur Gewinnung oder/und Anreicherung oder/und Abtrennung einer oder mehrerer Komponenten eines Gasgemisches, umfassend die Schritte:

$(a_1)$ Bereitstellen mindestens einer Schaumfilm-Membran-Anordnung gemäß einem der Ansprüche 1 bis 9 in einem Behälter, so dass eine erste Kammer A durch die Schaumfilm-Membran-Anordnungen von einer zweiten Kammer B getrennt ist;
$(b_1)$ Einführen des zu trennenden Gasgemisches in Kammer A, wobei in Kammer A ein größerer Druck als in Kammer B eingestellt wird,
und gegebenenfalls
$(c_1)$ Abführen des Permeats aus Kammer B.

**24.** Verfahren nach Anspruch 23, **dadurch gekennzeichnet, dass** die Druckdifferenz zwischen Kammer A und Kammer B in Schritt $(b_1)$ 10 Pa bis $10^6$ Pa beträgt.

**25.** Verfahren nach Anspruch 23 oder 24, **dadurch gekennzeichnet, dass** während der Durchführung des Verfahrens in beiden Kammern A und B ein variabler externer Überdruck $\Delta p_{ext}$ im Vergleich zu dem Umgebungsdruck eingestellt wird.

## Abbildung 1

Porenwand

Adsorptionsschicht

Wasserkern

Abbildung 2

a

Schaumfilm

durch Verdunstung zurückweichende
Flüssigkeitsfront

b

## Abbildung 3

Schaumfilm

A

B

Permeat

Feed

## Abbildung 4

Abbildung 5

feinporöse Deckschicht

Grobporöse Trägerschicht
für mechanische Stabilität

Abbildung 6